# EUROPÄISCHE PATENTSCHRIFT

(11) **EP 1 710 178 B1**
(45) Veröffentlichungstag und Bekanntmachung des Hinweises auf die Patenterteilung: **21.05.2008**
(21) Anmeldenummer: 06002372.8
(22) Anmeldetag: 06.02.2006
(51) Int. Cl.: B65G 47/90, B65G 57/03

(54) **Vorrichtung zum Stapeln von Lebensmittelhorden**
Device for stacking food trays
Dispositif pour l'empilage de claies d'aliments

(30) Priorität: 04.04.2005 DE 102005015388
(43) Veröffentlichungstag der Anmeldung: 11.10.2006
(73) Patentinhaber: ALPMA Alpenland Maschinenbau GmbH, 83543 Rott am Inn (DE)
(72) Erfinder: Hartinger, Wolfgang, 83137 Schonstett (DE)
(74) Vertreter: Manitz, Finsterwald & Partner GbR

(56) Entgegenhaltungen:
- DE-U1-9202005 017 55
- FR-A- 2 034 235

## Beschreibung

Die Erfindung betrifft eine Vorrichtung zum Stapeln von mehrere Füße aufweisenden Lebensmittelhorden, welche Greifer aufweist, mittels derer die Lebensmittelhorden erfasst werden können. Eine derartige Vorrichtung ist durch FR-A-2 034 235 bekannt.

Lebensmittelhorden, auf denen beispielsweise Käseportionen zum Zweck eines Reifungsprozesses abgelegt werden, müssen im Rahmen von zumeist automatisierten Prozessen zwischen verschiedenen Positionen bewegt und - beispielsweise zur Durchführung von vergleichsweise lange andauernden Reifungsprozessen - aufeinander gestapelt werden. Durch die dementsprechend erforderliche Handhabung der Lebensmittelhorden, welche grundsätzlich wiederverwendbar sind und somit eine sehr häufig wiederholte Handhabung erfahren, tritt oftmals eine Verformung der in der Regel aus metallischen Werkstoffen bestehenden Lebensmittelhorden auf, was insbesondere dann störend ist, wenn sich eine solche Verformung auf die Position der Füße der Lebensmittelhorden auswirkt. Eine derartige Verformung erschwert nämlich das Stapeln von Lebensmittelhorden oder macht dies sogar unmöglich.

Beim Stapeln von Lebensmittelhorden müssen die Füße einer oberen Lebensmittelhorde relativ exakt an dafür vorgesehene Positionen einer unteren Lebensmittelhorde aufgesetzt werden, was, wie bereits erwähnt, nicht ohne weiteres möglich ist, wenn sich die Relativpositionen der Füße einer Lebensmittelhorde zueinander infolge von unerwünschten Verformungen verändern.

Eine Aufgabe der Erfindung besteht darin, eine Vorrichtung der eingangs genannten Art derart weiterzubilden, dass ein Stapeln von Lebensmittelhorden, insbesondere auch von Lebensmittelhorden mit verformten Füßen, problemlos möglich wird.

Diese Aufgabe wird erfindungsgemäß dadurch gelöst, dass für jeden Fuß der zu stapelnden Lebensmittelhorden jeweils ein in eine definierte Ausrichtposition bewegbarer Greifer vorgesehen ist.

Mit einer erfindungsgemäßen Vorrichtung ist es folglich möglich, eine auf eine untere Lebensmittelhorde aufzusetzende obere Lebensmittelhorde in einer Weise zu erfassen, dass alle Füße der oberen Lebensmittelhorde von jeweils einem, dem entsprechenden Fuß zugeordneten Greifer gehalten werden, wobei alle Greifer letztlich in eine definierte Ausrichtposition bewegbar sind. Durch dieses Bewegen der Greifer gemeinsam mit den durch sie erfassten Füßen der oberen Lebensmittelhorde in die jeweilige Ausrichtposition wird zwangsläufig auch eine Verformung der Füße der oberen Lebensmittelhorde bewirkt. Da die Greifer gemeinsam mit dem jeweils ergriffenen Hordenfuß immer in eine definierte Ausrichtposition bewegt werden, verformt sich bei dieser Bewegung auch der jeweilige Hordenfuß der Lebensmittelhorde zwangsläufig in einer Weise, dass er sich ebenfalls in einer definierten Position befindet.

Nachdem also alle Greifer in ihre jeweilige Ausrichtposition und dabei auch die jeweils ergriffenen Hordenfüße in definierte Positionen bewegt wurden, ist es problemlos möglich, die derart erfasste obere Lebensmittelhorde positionsgenau auf einer unteren Lebensmittelhorde aufzusetzen, wobei sich alle Füße der oberen Lebensmittelhorde dabei in derart definierten Relativpositionen zueinander befinden, dass sie exakt an den dafür jeweils vorgesehenen Stellen der unteren Lebensmittelhorde positioniert werden können.

Nach dem Positionieren einer oberen Lebensmittelhorde auf einer unteren Lebensmittelhorde können die Greifer von den Füßen der oberen Lebensmittelhorde gelöst werden, woraufhin die nächste Lebensmittelhorde von den Greifern ergriffen werden kann, um diese nächste Lebensmittelhorde dann auf die genannte obere Lebensmittelhorde aufzusetzen. Dieser Prozess kann dann bis zu der jeweils gewünschten Stapelhöhe fortgesetzt werden.

Beim Loslassen der Füße einer auf eine untere Lebensmittelhorde aufgesetzten oberen Lebensmittelhorde sind zwei Fälle zu unterscheiden. Wenn die Lebensmittelhorden bzw. deren Füße aus einem zumindest begrenzt elastischen Material bestehen, werden die mittels der Greifer ausgerichteten Hordenfüße nach einem Loslassen durch die Greifer die Tendenz besitzen, sich zumindest wieder etwas zurück in ihre verformte Position zu bewegen. Dies könnte dann dazu führen, dass sich die Hordenfüße letztlich nicht mehr an der dafür vorgesehenen Position der unteren Lebensmittelhorde befinden. Diesem Problem kann durch eine entsprechende Ausgestaltung der Lebensmittelhorden wirksam begegnet werden, indem die Bereiche einer unteren Lebensmittelhorde, auf denen die Füße einer oberen Lebensmittelhorde aufliegen, entsprechend ausgestaltet werden. Beispielsweise können die genannten Bereiche als Vertiefungen, Aussparungen oder Ösen ausgebildet werden, in welche die Füße der oberen Lebensmittelhorde eingesetzt werden, so dass die Vertiefungen, Aussparungen bzw. Ösen nach einem Loslassen der Hordenfüße durch die Greifer für eine fortgesetzte Fixierung der Hordenfüße an ihrer dafür vorgesehenen Position der unteren Lebensmittelhorde sorgen.

Wenn die Lebensmittelhorden bzw. deren Füße aus einem nicht oder nur sehr gering elastischen Material bestehen, entsteht das vorstehend geschilderte Problem nicht, was bedeutet, dass die Hordenfüße von den Greifern problemlos losgelassen werden können, ohne dass die Bereiche der Lebensmittelhorden, auf denen die Füße aufsitzen, derart ausgestaltet sein müssen, dass sie ein Zurückspringen der Füße in ihre verformte Position verhindern.

Die erfindungsgemäße Vorrichtung ermöglicht folglich grundsätzlich ein problemloses Stapeln von Lebensmittelhorden, und zwar unabhängig davon, ob die Füße einer auf eine andere Lebensmittelhorde aufzusetzenden Lebensmittelhorde zu Beginn des Stapelvorgangs verformt sind.

Bei einer vorteilhaften Ausführungsform der Erfindung sind die Greifer senkrecht zu ihrer jeweiligen Schließrichtung in eine definierte Ausrichtposition bewegbar. Bei dieser Ausführungsform erfolgt ein erster Ausrichtschritt in Richtung der Schließrichtung der Greifer, welche in der Regel zwei Greiferbacken aufweisen, die aufeinander zu bewegt werden. Bei einem entsprechend verformten Hordenfuß gelangt in diesem Fall zuerst eine Greiferbacke in Anlage mit dem Hordenfuß und verformt bzw. verbiegt diesen in Schließrichtung dieser Greiferbacke bis letztlich beide Greiferbacken am Hordenfuß anliegen und diesen zwischen sich fixieren. Im Rahmen eines zweiten Ausrichtschritts wird der Greifer dann senkrecht zu seiner Schließrichtung in eine definierte Ausrichtposition bewegt, wodurch wiederum eine Verformung des Hordenfußes - diesmal senkrecht zur Schließrichtung der Greifer - bewirkt wird, welche letztlich dazu führt, dass sich der Hordenfuß am Ende des zweiten Ausrichtschritts exakt in der jeweils gewünschten, ausgerichteten Position befindet.

Die Bewegung der Greifer im Rahmen des zweiten Ausrichtschritts erfolgt bevorzugt im Wesentlichen in derjenigen Ebene, die durch die Gesamtheit aller Greifer aufgespannt wird. Alternativ ist jedoch auch eine Schwenkbewegung, insbesondere eine solche mit großem Schwenkradius, möglich.

Besonders vorteilhaft ist es, wenn jedem Greifer ein insbesondere bügelförmig ausgestaltetes Druckelement zugeordnet wird. Ein solches Druckelement kann bei geöffnetem Greifer mit einem auszurichtenden Hordenfuß in Kontakt gebracht und anschließend bei weiterhin geöffnetem Greifer in eine definierte Position bewegt werden, wodurch auch der Hordenfuß in Bewegungsrichtung des Druckelements in eine definierte Position bewegt bzw. gedrückt wirkt. Im Anschluss daran kann dann ein Schließen des Greifers erfolgen.

Das Druckelement ist dabei folglich bevorzugt zur Übertragung einer senkrecht zur Schließrichtung des Greifers gerichteten Kraft auf einen Hordenfuß ausgelegt. Dabei kann es gemeinsam mit dem ihm jeweils zugeordneten Greifer in derjenigen Ebene bewegbar sein, die durch die Greifer und/oder die Druckelemente aufgespannt wird. Bevorzugt ist es, wenn sich alle Druckelemente und alle Greifer im Wesentlichen innerhalb einer Ebene erstrecken, wobei diese Ebene beispielsweise parallel zu den Auflageflächen der Käsehorden verlaufen kann.

Bei Vorsehung des erwähnten Druckelements kann ein insgesamt dreistufiger Ausrichtvorgang der Hordenfüße stattfinden:

Zuerst werden, wie bereits erwähnt, bei geöffneten Greifern alle Druckelemente in eine erste definierte Position bewegt, wobei auch die jeweils zugeordneten Hordenfüße im Rahmen eines ersten Ausrichtschritts in Bewegungsrichtung der Druckelemente in eine definierte Position gedrückt werden. Anschließend werden dann die Greifer geschlossen, so dass während eines zweiten Ausrichtschritts eine Bewegung der Hordenfüße in Schließrichtung der jeweils an den Hordenfüßen anliegenden Greiferbacken stattfindet. Letztlich werden dann die geschlossenen Greifer während eines dritten Ausrichtschritts gemeinsam mit den Hordenfüßen in eine endgültige Ausrichtposition bewegt, wobei diese Bewegung entgegengesetzt oder gleichgerichtet zu derjenigen Bewegung abläuft, die im Rahmen des ersten Ausrichtschritts die Druckelemente vollzogen haben. Somit werden im dritten Ausrichtschritt die von den Greifern gehaltenen Hordenfüße letztlich in die gewünschte Ausrichtposition "gezogen" oder "gedrückt".

Alternativ zu einer Ausführungsform mit Druckelementen und Greifern, welche zwei aufeinander zu bewegbare Greiferbacken aufweisen, können erfindungsgemäß auch Greifer vorgesehen werden, welche die Hordenfüße von mehr als zwei Seiten, insbesondere allseitig umgreifen, so dass entweder alleine durch das Ergreifen der Hordenfüße bereits die gewünschte Ausrichtung erzielt wird oder dass bei geschlossenen Greifern durch deren Bewegung beliebige Ausrichtvorgänge durchführbar sind.

Vorteilhaft ist es, wenn eine, insbesondere aus zwei Greifern bestehende Greiferreihe gegenüber einer weiteren, ebenfalls insbesondere aus zwei Greifern bestehenden Greiferreihe angeordnet ist. Mit einer derartigen Vorrichtung können beispielsweise rechteckige Käsehorden gehandhabt werden, welche an jeder Ecke einen Hordenfuß aufweisen. Die genannten Greiferreihen können dabei gegenläufig und/oder gleichsinnig und insbesondere gleichzeitig antreibbar sein. In diesem Fall lässt sich der vorstehend erläuterte dreistufige Ausrichtprozess durchführen, indem z.B. zuerst bei geöffneten Greifern beide Greiferreihen gemeinsam mit den Druckelementen aufeinander zu bewegt werden, anschließend alle Greifer geschlossen werden und schließlich beide Greiferreihen mit geschlossenen Greifern bevorzugt gleichzeitig in ihre Ausrichtposition bewegt werden, bis sich auch alle Hordenfüße in ihrer jeweiligen ausgerichteten Position befinden. Das genannte Schließen aller Greifer oder das Schließen aller Greifer einer Greiferreihe erfolgt bevorzugt gleichzeitig.

Die Greifer und/oder die Druckelemente können beispielsweise aus Edelstahl bestehen. Wenn auch die Lebensmittelhorden aus Edelstahl gefertigt sind, bietet sich in diesem Fall die vorstehend erläuterte Ausführungsform, bei welcher die genannten Druckelemente eingesetzt werden, besonders an, da zwischen Edelstahl und Edelstahl eine hohe, unerwünschten Abrieb erzeugende Reibung auftritt, welche durch den erfindungsgemäßen Einsatz von Druckelementen in vorteilhafter Weise auf ein Minimum reduziert wird.

Alle Druckelemente können mit jeweils einem elektrischen Kontakt zur Detektion einer Berührung zwischen einem Druckelement und einem Hordenfuß gekoppelt sein. Durch einen solchen elektrischen Kontakt kann festgestellt werden, wann sich ein jeweiliges Druckelement in Kontakt mit einem Hordenfuß befindet, insbesondere kann detektiert werden, zu welchem Zeitpunkt mehrere oder sämtliche Hordenfüße einer Lebensmittelhorde von jeweils einem Druckelement berührt werden. Nach einer solchen Detektion kann dann beispielsweise ein synchrones Schließen aller Greifer oder aller Greifer einer Greiferreihe erfolgen. Ebenso kann nach einer solchen Detektion die Bewegungsgeschwindigkeit der Greifer reduziert werden, um so durch die Greifer verursachte Stöße auf die Lebensmittelhorde zu vermeiden. Derartige Stöße können nämlich auf nachteilige Weise die auf einer Lebensmittelhorde bestehende Ordnung von Lebensmittelportionen stören. In diesem Zusammenhang ist es von Vorteil, wenn der elektrische Kontakt des Druckelements so ausgeführt ist, dass zur Herstellung des Kontakts nur Teile des Druckelements, die eine geringe Masse besitzen, bewegt werden müssen. Die Bewegung derartiger Teile kann nämlich durch die Lebensmittelhorde bewirkt werden, ohne dass ihr ein relevanter Stoß versetzt wird. Zu dem Zeitpunkt, zu dem dann weitere Teile des Druckelements, die relevante Kräfte auf die Lebensmittelhorde ausüben, mit ihr in Kontakt kommen, kann die Geschwindigkeit des Druckelements oder des Greifer aufgrund der erfolgten Detektion bereits soweit reduziert sein, dass die Ordnung auf der Lebensmittelhorde nicht gestört wird.

Bei einem bevorzugten Verfahren zum Betrieb einer erfindungsgemäßen Vorrichtung werden die Greifer und/oder die Druckelemente gleichzeitig bewegt. Die Bewegungsgeschwindigkeit kann zu Beginn und während der Verformung der Hordenfüße zwischen 0,05 m/s und 0,15 m/ s und bevorzugt ungefähr 0,1 m/s betragen. Auch ein Schließen der Greifer bzw. Greiferbacken kann mit den vorstehend genannten Geschwindigkeiten erfolgen, um so wiederum Stoßbelastungen der Lebensmittelhorde zu vermeiden.

Bevor eine Verformung der Hordenfüße erfolgt und beispielsweise auch noch bei Herstellung des genannten elektrischen Kontakts, können sich Greifer und/oder Druckelemente deutlich schneller bewegen. Zum Beispiel sind hier Geschwindigkeiten zwischen 0,3 m/s und 0,7 m/s, insbesondere ungefähr 0,5 m/s möglich.

Wie bereits erläutert, können bei in Reihen angeordneten Greifern die Greiferreihen mit geöffneten Greifern insbesondere gleichzeitig aufeinander zu und mit geschlossenen Greifern insbesondere gleichzeitig voneinander weg oder aber auch in die gleiche Richtung bewegt werden. Wenn die Greiferreihen aufeinander zu bewegt werden, kann diese Bewegung unmittelbar nach dem Schließen des letzten Greifers einer Greiferreihe beendet werden. Alternativ kann die Bewegung auch bereits vor dem Schließen aller Greifer einer Greiferreihe beendet werden, nachdem alle Druckelemente einer Greiferreihe einen Kontakt mit den ihnen jeweils zugeordneten Hordenfüßen gemeldet haben.

Weitere bevorzugte Ausführungsformen der Erfindung sind in den Unteransprüchen angegeben.

Die Erfindung wird nachfolgend anhand der Zeichnungen erläutert; in diesen zeigen:
- Fig. 1: eine schematische Draufsicht auf eine Lebensmittelhorde mit deren Hordenfüßen zugeordneten Greifern,
- Fig. 2: eine Seitenansicht einer Lebensmittelhorde gemäß Fig. 1 unter Weglassung der Greifer,
- Fig. 3: eine schematische Anordnung eines Greifers mit Druckelement in einer ersten Position,
- Fig. 4: eine Anordnung gemäß Fig. 3 in einer zweiten Position, und
- Fig. 5: eine Anordnung gemäß den Fig. 3 und 4 in einer dritten Position.

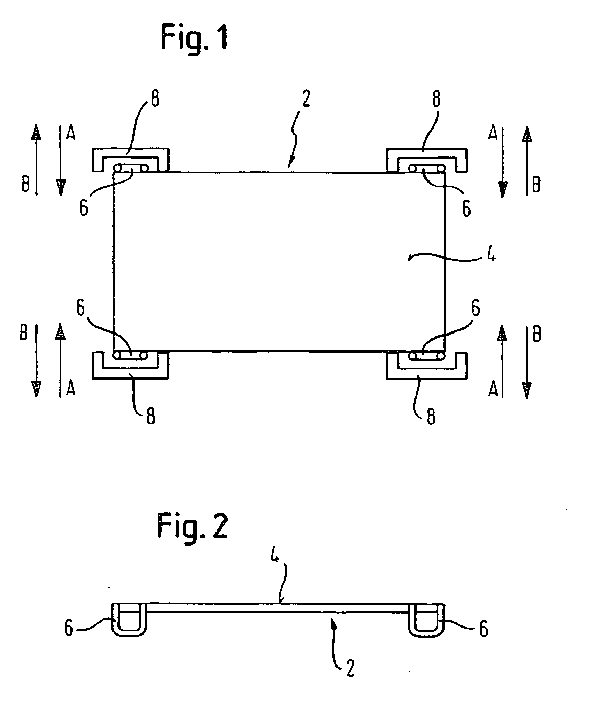

Die Fig. 1 und 2 zeigen eine im Wesentlichen rechteckige Lebensmittelhorde 2, welche eine Auflagefläche 4 aufweist, die sich in der Zeichenebene der Fig. 1 erstreckt. Auf diese Auflagefläche 4 können Lebensmittelprodukte, beispielsweise Käseportionen abgelegt werden.

Die Lebensmittelhorde 2 weist in aus dem Stand der Technik bekannter Weise eine in Fig. 1 nicht dargestellte Gitterstruktur auf, so dass die Lebensmittelhorde 2 letztlich einen Auflagerost bildet.

In allen vier Eckbereichen der Lebensmittelhorde 2 ist jeweils ein Hordenfuß 6 fest mit der Lebensmittelhorde 2 verbunden. Die Hordenfüße 6 erstrecken sich dabei im Wesentlichen senkrecht zur Auflagefläche 4 nach unten und sind aus einem U-förmig gebogenen Element gefertigt, welches mit den beiden Enden seiner Schenkel mit dem Bereich der Auflagefläche 4 fest verbunden, insbesondere verschweißt, ist.

Die gesamte Lebensmittelhorde 2 einschließlich der Hordenfüße 6 kann aus Edelstahl, insbesondere aus einer Vielzahl von miteinander verbundenen, im Querschnitt kreisförmigen, ggf. gebogenen Edelstahlstäben bestehen.

Jedem Hordenfuß 6 ist jeweils ein separater Greifer 8 zugeordnet, wobei diese Greifer 8 in Fig. 1 lediglich schematisch angedeutet sind.

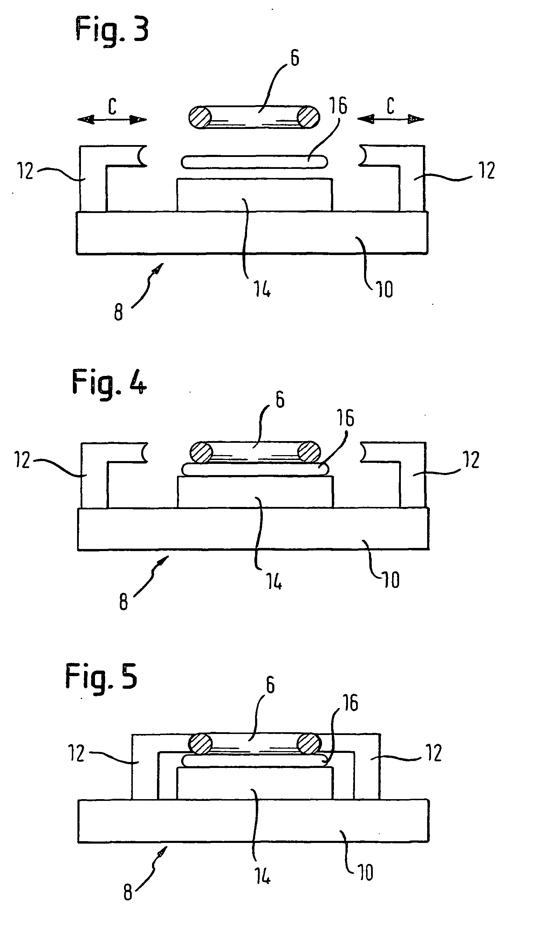

Ein prinzipiell möglicher Aufbau der Greifer 8 geht aus den Fig. 3 bis 5 hervor, welche jeweils eine Draufsicht auf den Greifer entsprechend Fig. 1 zeigen.

Gemäß den Fig. 3 bis 5 besteht der Greifer 8 aus einem Basiselement 10, an welchem beweglich in Richtung der Doppelpfeile C zwei Greiferbacken 12 angeordnet sind.

Zwischen den beweglichen Greiferbacken 12 ist ein zweiteiliges Druckelement 14, 16 am Basiselement 10 angeordnet. Konkret ist ein starrer

Bereich 14 des Druckelements fest mit dem Basiselement 10 verbunden, wobei wiederum mit dem Bereich 14 des Druckelements in nicht dargestellter Weise beweglich ein weiterer beweglicher Bereich 16 des Druckelements gekoppelt ist. Der bewegliche Bereich 16 des Druckelements kann senkrecht zur Pfeilrichtung C in der Zeichenebene ausgehend von seiner Position gemäß Fig. 3 in Richtung des starren Bereichs 14 verschoben werden, bis sich der bewegliche Bereich 16 und der starre Bereich 14 des Druckelements berühren und auf diese Weise einen detektierbaren elektrischen Kontakt zwischen sich herstellen. Ein derartiger elektrischer Kontakt kann an eine nicht dargestellte Steuerungseinheit gemeldet werden, welche dann die Greifer 8 in der jeweils gewünschten und nachstehend noch näher erläuterten Weise ansteuert.

Der Betrieb einer Vorrichtung gemäß den Fig. 1, 3, 4 und 5 kann beispielsweise wie folgt ablaufen:

Im Sollzustand der Käsehorde 2, in der keinerlei Verformungen derer Füße 6 existieren, erstrecken sich die Füße 6 exakt senkrecht zur Auflagefläche 4 der Käsehorde 2. Das der Erfindung zu Grunde liegende Problem besteht darin, dass durch eine wiederholte Handhabung der Käsehorde 2 eine Verformung der Füße 6 auftreten kann und auch regelmäßig auftritt, so dass sich zumindest einige der Füße 6 nicht mehr senkrecht, sondern schräg zur Auflagefläche 4 der Käsehorde 2 erstrecken.

Wenn eine solche Käsehorde 2 mit zumindest teilweise schräg abstehenden Füßen 6 mittels einer erfindungsgemäßen Vorrichtung ergriffen wird, können bei einer bevorzugten Ausführungsform der Erfindung folgende Verfahrensschritte ablaufen:

Zuerst werden die beiden einander gegenüberliegenden, jeweils aus zwei Greifern 8 bestehenden Greiferreihen in Richtung der Pfeile A gemäß Fig. 1 aufeinander zu bewegt. Die Bewegung jeder Greiferreihe wird dabei solange fortgesetzt, bis der bewegliche Bereich 16 des Druckelements des ersten Greifers mit den ihm zugeordneten Hordenfuß 6 in Berührung kommt, woraufhin eine weiter fortgesetzte Bewegung der Greiferreihe dafür sorgt, dass der bewegliche Bereich 16 des Druckelements des ersten Greifers an den starren Bereich 14 des Druckelements gedrückt wird, so dass zwischen den beiden Bereichen 14, 16 ein elektrischer Kontakt auftritt, welcher an eine geeignete Steuereinheit gemeldet wird. In der Folge wird dann die Bewegung der Greiferreihe verlangsamt fortgesetzt, bis der zweite Greifer der genannten Greiferreihe ebenfalls einen elektrischen Kontakt meldet.

Sobald ein derartiger elektrischer Kontakt bezüglich beider Greifer 8 einer Greiferreihe gemeldet wurde, ist es grundsätzlich möglich, die Bewegung der Greiferreihe in Richtung des Pfeils A gemäß Fig. 1 zu beenden. In diesem Fall können die einer Greiferreihe zugeordneten Hordenfüße 6 bei Beendigung der Bewegung entweder beide bezogen auf die Lebensmittelhorde 2 etwas schräg nach außen oder auch etwas schräg nach innen stehen.

Alternativ erfolgt eine Beendigung der Bewegung einer Greiferreihe erst dann, wenn beide Kontakte zwischen den Bereichen 14, 16 geschlossen sind und zugleich sichergestellt ist, dass die den jeweiligen Greifern 8 zugeordneten Hordenfüße 6 zumindest etwas über ihre senkrecht zur Auflagefläche 4 verlaufende Position hinaus verformt wurden, so dass sie letztlich bezogen auf die Lebensmittelhorde 2 etwas schräg nach innen stehen.

Mit der zweiten Greiferreihe wird gleichzeitig entsprechend verfahren.

Der Beginn der beschriebenen Bewegung, bei dem zwischen dem Druckelement 14, 16 und dem zugeordneten Hordenfuß 6 noch kein Kontakt besteht, ist in Fig. 3 dargestellt. Aus dieser Figur ist ersichtlich, dass zwischen den beiden Bereichen 14, 16 des Druckelements ein Abstand existiert, so dass kein elektrischer Kontakt zwischen den beiden genannten Bereichen 14, 16 existieren kann. Ferner sind die Greiferbacken 12 in ihrer geöffneten Position.

Zum Abschluss der beschriebenen Bewegung der Greiferreihen wird eine Position gemäß Fig. 4 erreicht. Hier liegt der Hordenfuß 6 am beweglichen Bereich 16 des Druckelements an, wobei dieser bewegliche Bereich 16 wiederum direkt am starren Bereich 14 des Druckelements anliegt, so dass ein elektrischer Kontakt zwischen diesen beiden Bereichen 14, 16 existiert. Die Greiferbacken 12 sind in dieser Position immer noch geöffnet und der Hordenfuß 6 ragt bezogen auf die Lebensmittelhorde schräg nach innen oder schräg nach außen.

In der Folge werden dann die beiden Greiferbacken 12 aufeinander zu bewegt, bis sie den Hordenfuß 6 von zwei Seiten umgreifen. Dabei verformt die den Hordenfuß 6 zuerst berührende Greiferbacke 12 den Hordenfuß 6 solange in Bewegungsrichtung der genannten Greiferbacke 12 bis auch die andere Greiferbacke 12 am Hordenfuß 6 anliegt.

Nachdem dieser, in Fig. 5 dargestellte Zustand bezüglich aller vier Greifer 8 erreicht wurde, stehen
a) sämtliche Hordenfüße 6 der Käsehorde 2 etwas schräg nach innen,
b) sämtliche Hordenfüße 6 der Käsehorde 2 etwas schräg nach außen, oder
c) die einer Greiferreihe zugeordneten Hordenfüße 6 der Käsehorde 2 etwas schräg nach innen und die der anderen Greiferreihe zugeordneten Hordenfüße 6 etwas schräg nach außen.

In jedem Fall liegen alle Hordenfüße 6 an den ihnen jeweils zugeordneten Druckelementen 16, 14 an und sind von den ihnen jeweils zugeordneten Greiferbacken 12 erfasst.

In einem anschließenden Verfahrensschritt werden dann gemäß den vorstehend genannten Alternativen a) bis c) alle Greifer 8 gleichzeitig
a) nach außen in Richtung der Pfeile B gemäß Fig. 1 bewegt,
b) nach innen in Richtung der Pfeile A gemäß Fig. 1 bewegt, oder
c) es werden die Greifer 8 einer Greiferreihe nach außen in Richtung der Pfeile B gemäß Fig. 1 und die Greifer 8 der anderen Greiferreihe nach innen in Richtung der Pfeile A gemäß Fig. 1 bewegt.

In jedem Fall werden die Greifer 8 so lange in ihre jeweilige Richtung bewegt, bis sich alle Füße 6 senkrecht zur Auflagefläche 4 der Käsehorde 2 erstrecken. In dieser Position kann die Käsehorde 2 problemlos auf eine weitere, darunter befindliche Käsehorde 2 aufgesetzt werden. Wenn die Käsehorden 2 grundsätzlich mit in den Figuren nicht dargestellten, sich nach oben öffnenden Ösen ausgestattet sind, in die die Füße 6 einer oberen Käsehorde von oben eingeführt werden können, ist auf diese Weise sichergestellt, dass beim Aufsetzen einer oberen Käsehorde 2 auf eine untere Käsehorde die Füße 6 auch genau in diese Ösen hineinbewegt werden können, da sie sich alle in einer definierten, ausgerichteten Position befinden, in der sie sich senkrecht zur Auflagefläche 4 der jeweiligen Käsehorde 2 erstrecken. Nach dem Einführen der Füße 6 einer oberen Käsehorde 2 in die Ösen einer unteren Käsehorde können die Greiferbacken 12 die ihnen jeweils zugeordneten Hordenfüße 6 freigeben, woraufhin eine weitere Käsehorde ergriffen und der Stapelvorgang fortgesetzt werden kann.

### Bezugszeichenliste

- 2: Lebensmittelhorde
- 4: Auflagefläche
- 6: Hordenfuß
- 8: Greifer
- 10: Basiselement
- 12: Greiferbacken
- 14: Druckelement (starrer Bereich)
- 16: Druckelement (beweglicher Bereich)

## Patentansprüche

1. Vorrichtung zum Stapeln von mehrere Füße (6) aufweisenden Lebensmittelhorden (2) mit Greifern (8) zum Erfassen der Lebensmittelhorden (2),
**dadurch gekennzeichnet,**
**dass** für jeden Fuß (6) der zu stapelnden Lebensmittelhorden (2) jeweils ein in jeweils eine definierte Ausrichtposition bewegbarer Greifer (8) vorgesehen ist.

2. Vorrichtung nach Anspruch 1,
**dadurch gekennzeichnet,**
**dass** die Greifer (8) senkrecht zu ihrer Schließrichtung in ihre jeweilige definierte Ausrichtposition bewegbar sind und/oder senkrecht zu deren Schließrichtung im Wesentlichen in derjenigen Ebene bewegbar sind, die durch die Greifer (8) aufgespannt wird.

3. Vorrichtung nach einem der vorhergehenden Ansprüche,
**dadurch gekennzeichnet,**
**dass** jedem Greifer (8) ein insbesondere bügelförmig ausgestaltetes Druckelement (14, 16) zugeordnet ist, wobei insbesondere das Druckelement (14, 16) zur Übertragung einer senkrecht zur Schließrichtung des Greifers (8) gerichteten Kraft auf einen Fuß (6) der Lebensmittelhorde (2) ausgelegt ist, und/oder das Druckelement (14, 16) gemeinsam mit dem ihm zugeordneten Greifer (8) im Wesentlichen in derjenigen Ebene bewegbar ist, die durch die Greifer (8) und/oder die Druckelemente (14, 16) aufgespannt wird.

4. Vorrichtung nach Anspruch 3,
**dadurch gekennzeichnet,**
**dass** sich alle Druckelemente (14, 16) und alle Greifer (8) im Wesentlichen innerhalb einer Ebene erstrecken.

5. Vorrichtung nach einem der vorhergehenden Ansprüche,
**dadurch gekennzeichnet,**
**dass** eine, insbesondere aus zwei Greifern (8) bestehende Greiferreihe gegenüber einer weiteren, ebenfalls insbesondere aus zwei Greifern (8) bestehenden Greiferreihe angeordnet ist, wobei die Greiferreihen insbesondere gegenläufig und/oder in untereinander gleiche Richtungen antreibbar sind.

6. Vorrichtung nach einem der vorhergehenden Ansprüche,
**dadurch gekennzeichnet,**
**dass** die Greifer (8) und/oder die Druckelemente (14, 16) aus Edelstahl bestehen.

7. Vorrichtung nach einem der Ansprüche 3 bis 6,
**dadurch gekennzeichnet,**
**dass** alle Druckelemente (14, 16) mit jeweils einem elektrischen Kontakt zur Detektion einer Berührung zwischen einem Druckelement (14, 16) und einem Fuß (6) einer Lebensmittelhorde (2) gekoppelt sind.

8. Verfahren zum Betrieb einer Vorrichtung nach einem der vorhergehenden Ansprüche,
**dadurch gekennzeichnet,**
**dass** die Greifer (8) und/oder die Druckelemente (14, 16) gleichzeitig bewegt werden.

9. Verfahren nach Anspruch 8,
**dadurch gekennzeichnet,**
**dass** die Greifer (8), deren Greiferbacken und/oder die Druckelemente (14, 16) während sie einen Fuß (6) verformen, mit einer Bewegungsgeschwindigkeit zwischen 0,05 m/ s und 0,15 m/ s und bevorzugt ungefähr 0,1 m/s bewegt werden und/oder dass die Greiferreihen gemäß Anspruch 5 mit geöffneten Greifern (8) insbesondere gleichzeitig aufeinander zu und mit geschlossenen Greifern (8) insbesondere gleichzeitig voneinander weg oder gleichzeitig in die gleiche Richtung bewegbar sind.

10. Verfahren nach einem der Ansprüche 8 oder 9,
**dadurch gekennzeichnet,**
**dass** die Greifer (8) einer Greiferreihe mit geöffneten Greifern (8), ggf. unter Verformung von Füßen (6) einer Lebensmittelhorde (2), gemeinsam in Richtung der gegenüberliegenden Greiferreihe bewegt werden bis die Druckelemente (14, 16) aller Greifer (8) der Greiferreihe an den ihnen jeweils zugeordneten Füßen (6) der Lebensmittelhorde (2) anliegen, woraufhin alle Greifer (8) der Greiferreihe geschlossen werden, wobei insbesondere die Bewegung der Greiferreihe in Richtung der gegenüberliegenden Greiferreihe unmittelbar nach oder vor dem Schließen aller Greifer (8) der jeweiligen Greiferreihe beendet wird.

11. Verfahren nach einem der Ansprüche 8 bis 10,
**dadurch gekennzeichnet,**
**dass** nach dem Schließen aller Greifer (8) beider Greiferreihen die Greiferreihen mit geschlossenen Greifern (8), ggf. unter Verformung von Füßen (6) der Lebensmittelhorde (2), insbesondere gleichzeitig in ihre jeweilige Ausrichtposition bewegt werden.

## Claims

1. An apparatus for the stacking of food trays (2) having a plurality of feet (6) which has grips (8) for the gripping of the food trays (2),
**characterised in that**
a respective gripper (8) which can be moved into a respective defined alignment position is provided for each foot (6) of the food trays (2) to be stacked.

2. An apparatus in accordance with claim 1, **characterised in that** the grippers (8) are movable perpendicular to their closing direction into their respective defined alignment position and/or are movable perpendicular to their closing direction substantially **in that** plane which is spanned by the grippers (8).

3. An apparatus in accordance with any one of the preceding claims, **characterised in that** a pressing element (14, 16), in particular a pressing element designed in hoop shape, is associated with each gripper (8), with in particular the pressing element (14, 16) being designed for the transmission of a force directed perpendicular to the closing direction of the gripper (8) onto a foot (6) of the food tray (2) and/or the pressing element (14, 16) being movable together with the gripper (8) associated with it substantially **in that** plane which is spanned by the grippers (8) and/or the pressing elements (14, 16).

4. An apparatus in accordance with claim 3, **characterised in that** all the pressing elements (14, 16) and all the grippers (8) extend substantially within one plane.

5. An apparatus in accordance with any one of the preceding claims, **characterised in that** a gripper row which in particular comprises two grippers (8) is arranged opposite a further gripper row, likewise in particular comprising two grippers (8), with the gripper rows in particular being able to be driven in opposite senses and/or in the same directions as one another.

6. An apparatus in accordance with any one of the preceding claims, **characterised in that** the grippers (8) and/or the pressing elements (14, 16) comprise stainless steel.

7. An apparatus in accordance with anyone of the claims 3 to 6, **characterised in that** all the pressing elements (14, 16) are each coupled to an electrical contact for the detection of a contact between a pressing element (14, 16) and a foot (6) of a food tray (2).

8. A method for the operation of an apparatus in accordance with any one of the preceding claims, **characterised in that** the grippers (8) and/or the pressing elements (14, 16) are moved simultaneously.

9. A method in accordance with claim 8, **characterised in that** the grippers (8), their gripper jaws and/or the pressing elements (14, 16) are moved, while they deform a foot (6), at a movement speed between 0.05 m/ s and 0.15 m/ s and preferably approximately 0.1 m/s; and/or **in that** the gripper rows in accordance with claim 5 are in particular movable toward one another simultaneously with open grippers (8) and are in particular movable away from one another simultaneously or in the same direction simultaneously with closed grippers (8).

10. A method in accordance with one of the claims 8 or 9, **characterised in that** the grippers (8) of a gripper row with open grippers (8) are moved together in the direction of the oppositely disposed gripper row, optionally while deforming feet (6), until the pressing elements (14, 16) of all grippers (8) of the gripper row contact the feet (6) of the food tray (2) respectively associated with them, whereupon all the grippers (8) of the gripper row are closed, with in particular the movement of the gripper row in the direction of the oppositely disposed gripper row being ended directly after or before the closing of all grippers (8) of the respective gripper row.

11. A method in accordance with any one of the claims 8 to 10, **characterised in that**, after the closing of all the grippers (8) of both gripper rows, the gripper rows with closed grippers (8) are moved into their respective aligned position, in particular simultaneously, optionally while deforming feet (6) of the food tray (2).

## Revendications

1. Appareil pour empiler des clayettes pour aliments (2) qui comportent plusieurs pieds (6) avec des préhenseurs (8) pour saisir les clayettes (2),
**caractérisé en ce que**, pour chaque pied (6) des clayettes à empiler (2), il est prévu respectivement un préhenseur (8) respectivement déplaçable dans une position d'alignement définie.

2. Appareil selon la revendication 1,
**caractérisé en ce que** les préhenseurs sont déplaçables vers leurs positions d'alignement définies respectives perpendiculairement à leur direction de fermeture, et/ou sont déplaçables perpendiculairement à leur direction de fermeture et essentiellement dans le plan qui est défini par les préhenseurs.

3. Appareil selon l'une des revendications précédentes,
**caractérisé en ce qu'**à chaque préhenseur (8) est associé un élément presseur (14, 16), conçu en particulier en forme d'arceau, et en particulier l'élément presseur (14, 16) est conçu pour transmettre une force orientée perpendiculairement à la direction de fermeture du préhenseur (8) vers un pied (6) de la clayette, et/ou l'élément presseur (14, 16) est déplaçable conjointement avec le préhenseur (8) qui lui est associé essentiellement dans le plan qui est défini par les préhenseurs (8) et/ou par les éléments presseurs (14, 16).

4. Appareil selon la revendication 3,
**caractérisé en ce que** tous les éléments presseurs (14, 16) et tous les préhenseurs (8) s'étendent essentiellement à l'intérieur d'un plan.

5. Appareil selon l'une des revendications précédentes,
**caractérisé en ce qu'**une rangée de préhenseurs, en particulier constituée par deux préhenseurs (8), est agencé en vis-à-vis d'une autre rangée de préhenseurs constituée par deux préhenseurs (8), les rangées de préhenseurs pouvant être entraînées en particulier en sens opposé et/ou dans des directions différentes.

6. Appareil selon l'une des revendications précédentes,
**caractérisé en ce que** les préhenseurs (8) et/ou les éléments presseurs (14, 16) sont en aciers spéciaux.

7. Appareil selon l'une des revendications 3 à 6,
**caractérisé en ce que** tous les éléments presseurs (14, 16) sont respectivement couplés avec un contact électrique pour la détection d'un contact entre un élément presseur (16, 14) et un pied (6) d'une clayette (2).

8. Procédé pour le fonctionnement d'un appareil selon l'une des revendications précédentes,
**caractérisé en ce que** les préhenseurs (8) et/ou les éléments presseurs (14, 16) sont déplacés simultanément.

9. Procédé selon la revendication 8,
**caractérisé en ce que** les préhenseurs (8), leurs mâchoires de préhension et/ou les éléments presseurs (14, 16), pendant qu'ils(elles) déforment un pied (6), sont déplacé(e)s à une vitesse de déplacement entre 0,05 m/s et 0,15 m/s et de préférence environ 0,1 m/s, et/ou **en ce que** les rangées de préhenseurs selon la revendication 1 sont déplaçables avec les préhenseurs (8) ouverts, en particulier simultanément en rapprochement, et sont déplacées avec les préhenseurs fermés (8) en particulier simultanément en éloignement les unes des autres ou simultanément dans la même direction.

10. Procédé selon l'une des revendications 8 ou 9,
**caractérisé en ce que** les préhenseurs (8) d'une rangée de préhenseurs avec préhenseurs ouverts (8), le cas échéant avec déformation des pieds (6) d'une clayette pour produits alimentaires (2), sont déplacés conjointement en direction de la rangée de préhenseurs opposée, jusqu'à ce que les éléments presseurs (14, 16) de tous les préhenseurs (8) de la rangée de préhenseurs s'appliquent contre les pieds (6) de la clayette (2) qui leur sont respectivement associés, suite à quoi tous les préhenseurs (8) de la rangée de préhenseurs sont fermés, et en particulier le mouvement de la rangée de préhenseurs en direction de la rangée de préhenseurs opposée est terminé immédiatement après ou avant la fermeture de tous les préhenseurs (8) de la rangée de préhenseurs respective.

11. Procédé selon l'une des revendications 8 à 10,
**caractérisé en ce qu'**après la fermeture de tous les préhenseurs (8) des deux rangées de préhenseurs, les rangées de préhenseurs avec préhenseurs fermés (8) sont déplacées dans leurs positions d'orientations respectives, le cas échéant avec déformation des pieds (6) de la clayette (2), en particulier simultanément.
